# EUROPEAN PATENT APPLICATION

(11) **EP 4 780 081 A1**
(43) Date of publication of application: **22.07.2026**
(21) Application number: 24863965.0
(22) Date of filing: 15.01.2024
(51) Int. Cl.: H04W 48/20

(54) **WIRELESS COMMUNICATION METHOD, TERMINAL DEVICE, AND BASE STATION**

(30) Priority: 15.09.2023 CN 202311200183
(71) Applicant: Quectel Wireless Solutions Co., Ltd., Shanghai 201601 (CN)
(72) Inventor: ZHAO, Zheng, Shanghai 201601 (CN)
(74) Representative: Fish & Richardson P.C.
(86) International application number: PCT/CN2024/072291
(87) International publication number: WO 2025/055231

(57) **Abstract**

Disclosed are a method for wireless communication, and a terminal device and a base station therefor. The method includes: determining, by a terminal device, a first base station; and transmitting, by the terminal device, a first message to the first base station, wherein the first message includes first information, the first information being associated with a first XR service; wherein the terminal device is configured with a master cell group and a secondary cell group; the first base station is a master base station corresponding to the master cell group; and/or the first base station is a secondary base station corresponding to the secondary cell group. The present disclosure specifies the base station to which a terminal device reports service-related parameters (that is, the first base station), thereby helping to avoid communication errors.

## Description

This application is based upon and claims priority to Chinese Patent Application No. 202311200183.7, filed before Chinese Patent Office September 15, 2023 and entitled "METHOD FOR WIRELESS COMMUNICATION, AND TERMINAL DEVICE AND BASE STATION THEREFOR," the entire contents of which are incorporated herein by reference.

### TECHNICAL FIELD

The present disclosure relates to the technical field of wireless communications, and in particular, relates to a method for wireless communication, and a terminal device and a base station therefor.

### BACKGROUND

In a wireless communication system, a terminal device may report, via assistance information, parameters related to a type of service (such as an extended reality (XR) service) to a base station to assist the base station in determining a more suitable scheduling strategy. However, in a dual-connectivity scenario where a terminal device is configured with a master base station and a secondary base station, it is not clearly defined to which base station the terminal device should report such related parameters. This ambiguity may cause communication errors.

### SUMMARY

Embodiments of the present disclosure provide a method for wireless communication, and a terminal device and a base station therefor. Various aspects of embodiments of the present disclosure are described hereinafter.

In a first aspect of the embodiments of the present disclosure, a method for wireless communication is provided. The method includes: determining, by a terminal device, a first base station; and transmitting, by the terminal device, a first message(user equipment assistance information, UAI message) to the first base station, wherein the first message includes first information, the first information being associated with a first XR service; wherein the terminal device is configured with a master cell group and a secondary cell group; the first base station is a master base station corresponding to the master cell group; and/or the first base station is a secondary base station corresponding to the secondary cell group.

In a second aspect of the embodiments of the present disclosure, a method for wireless communication is provided. The method includes: receiving, by a first base station, a first message (UAI message) from a terminal device, wherein the first message includes first information, the first information being associated with a first XR service; wherein the terminal device is configured with a master cell group and a secondary cell group; the first base station is a master base station corresponding to the master cell group; and/or the first base station is a secondary base station corresponding to the secondary cell group.

In a third aspect of the embodiments of the present disclosure, a terminal device is provided. The terminal device includes: a determining module, configured to determine a first base station; and a communication module, configured to transmit a first message to the first base station, wherein the first message includes first information, the first information being associated with a first XR service; wherein the terminal device is configured with a master cell group and a secondary cell group; the first base station is a master base station corresponding to the master cell group; and/or the first base station is a secondary base station corresponding to the secondary cell group.

In a fourth aspect of the embodiments of the present disclosure, a base station is provided. The base station is a first base station, wherein the first base station includes: a communication module, configured to receive a first message from a terminal device, wherein the first message includes first information, the first information being associated with a first XR service; wherein the terminal device is configured with a master cell group and a secondary cell group; the first base station is a master base station corresponding to the master cell group; and/or the first base station is a secondary base station corresponding to the secondary cell group.

In a fifth aspect of the embodiments of the present disclosure, a terminal device is provided. The terminal device includes a transceiver, a memory, and a processor, wherein the memory is configured to store one or more programs, and the processor is configured to call the one or more programs stored in the memory and control the transceiver to receive or transmit a signal to cause the communication device to perform the method according to the first aspect.

In a sixth aspect of the embodiments of the present disclosure, a base station is provided. The base station includes a transceiver, a memory, and a processor, wherein the memory is configured to store one or more programs, and the processor is configured to call the one or more programs stored in the memory and control the transceiver to receive or transmit a signal to cause the base station to perform the method according to the second aspect.

In a seventh aspect of the embodiments of the present disclosure, an apparatus is provided. The apparatus includes a processor, wherein the processor is configured to call one or more programs from a memory to perform the method according to any of the first aspect or the second aspect.

In an eighth aspect of the embodiments of the present disclosure, a chip is provided. The chip includes a processor, wherein the processor is configured to call one or more programs from a memory to cause a device equipped with the chip to perform the method according to any of the first aspect or the second aspect.

In a ninth aspect of the embodiments of the present disclosure, a computer-readable storage medium storing one or more programs therein is provided, wherein the one or more programs, when loaded and run by a computer, cause the computer to perform the method according to any of the first aspect or the second aspect.

In a tenth aspect of the embodiments of the present disclosure, a computer program product is provided. The computer program product includes one or more programs, wherein the one or more programs, when loaded and run by a computer, cause the computer to perform the method according to any of the first aspect or the second aspect.

In an eleventh aspect of the embodiments of the present disclosure, a computer program is provided. The computer program, when loaded and run by a computer, causes the computer to perform the method according to any of the first aspect or the second aspect.

The present disclosure specifies the base station to which a terminal device reports service-related parameters in a dual-connectivity scenario, thereby helping to avoid communication errors.

### BRIEF DESCRIPTION OF THE DRAWINGS

FIG. 1 is a schematic diagram of a dual-connectivity scenario;
FIG. 2 is a schematic flowchart of a terminal device transmitting a UAI message;
FIG. 3 is a schematic flowchart of a configuration procedure of XR services in the related art;
FIG. 4 is a schematic flowchart of a terminal device transmitting a UAI message in a dual-connectivity scenario;
FIG. 5 is a schematic flowchart of a method for wireless communication according to some embodiments of the present disclosure;
FIG. 6 is a schematic flowchart of a method for wireless communication according to some embodiments of the present disclosure;
FIG. 7 is a schematic diagram of a process for determining configured grant (CG) resources according to some embodiments of the present disclosure;
FIG. 8 is a schematic flowchart of a method for wireless communication according to some embodiments of the present disclosure;
FIG. 9A is a schematic diagram of a possible implementation of the method illustrated in FIG. 8.
FIG. 9B is a schematic diagram of a process for determining a time-domain offset of a CG resource in FIG. 8.
FIG. 10 is a schematic flowchart of a method for wireless communication according to some embodiments of the present disclosure;
FIG. 11 is a schematic diagram of a timing relationship between two prohibit timers according to some embodiments of the present disclosure;
FIG. 12 is a schematic structural diagram of a terminal device according to some embodiments of the present disclosure;
FIG. 13 is a schematic structural diagram of a base station according to some embodiments of the present disclosure;
FIG. 14 is a schematic structural diagram of a terminal device according to some embodiments of the present disclosure;
FIG. 15 is a schematic structural diagram of a base station according to some embodiments of the present disclosure;
FIG. 16 is a schematic structural diagram of a terminal device according to some embodiments of the present disclosure;
FIG. 17 is a schematic structural diagram of a base station according to some embodiments of the present disclosure; and
FIG. 18 is a schematic structural diagram of a communication apparatus according to some embodiments of the present disclosure.

### DETAILED DESCRIPTION

The technical solutions according to some embodiments of the present disclosure are described in detail clearly and completely hereinafter with reference to the accompanying drawings for the embodiments of the present disclosure. Apparently, the described embodiments are only a portion of embodiments of the present disclosure, but not all the embodiments of the present disclosure.

### Architecture of communication system

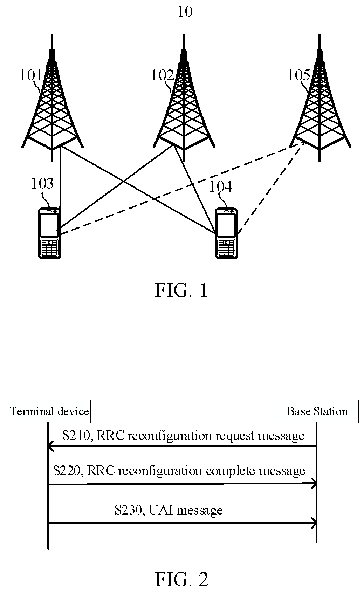

A communication system to which the embodiments of the present disclosure are applicable is described below with reference to FIG. 1.

As illustrated in FIG. 1, a communication system 10 may include a base station 101, a base station 102, a base station 105, a terminal device 103, and a terminal device 104. The communication system 10 has a dual-connectivity architecture, wherein the base station 101 is a master base station, and the base station 102 and the base station 105 are secondary base stations.

A base station in FIG. 1 may be any device with a wireless transmission and reception function, including but not limited to: an evolved Node B (eNB or e-NodeB) in long-term evolution (LTE), a base station (gNodeB or gNB) or a transmission reception point (TRP) in new radio (NR), a base station in a subsequent evolution of the 3^{rd} Generation Partnership Project (3GPP), or the like. The base station may be a macro base station, a micro base station, a pico base station, a small cell, a relay station, a balloon station, or the like. A plurality of base stations may support a network using a single one of the above-mentioned technologies, or may support networks using different ones of the above-mentioned technologies. The base station may include one or more co-located or non-co-located TRPs. The base station may also be a radio controller, a centralized unit (CU), and/or a distributed unit (DU) in a cloud radio access network (CRAN) scenario. The base station may be stationary or mobile. For example, a helicopter or unmanned aerial vehicle may be configured to serve as a mobile base station, and one or more cells may move depending on the location of the mobile base station. In other examples, the helicopter or unmanned aerial vehicle may be configured to serve as a device to communicate with another base station.

The terminal device in FIG. 1 is a device with wireless transceiver capabilities that can be deployed on land, including indoors or outdoors, handheld, wearable, or vehicle-mounted; or may be deployed on the water (e.g., on ships); and may be deployed in the air (e.g., on airplanes, balloons, and satellites). The terminal device may be a mobile phone, a tablet computer (Pad), a computer with wireless transceiver capabilities, a virtual reality (VR) terminal device, an augmented reality (AR) terminal device, a terminal in industrial control, a vehicle-mounted terminal device, a terminal device in self-driving, a terminal device in assisted driving, a terminal device in remote medical services, a terminal device in a smart grid, a terminal device in transportation safety, a terminal device in a smart city, a terminal device in a smart home, or the like. The application scenarios are not limited in the embodiments of the present disclosure. The terminal device according to the embodiments of the present disclosure may also be referred to as a user equipment (UE), an access terminal, a subscriber unit, a subscriber station, a mobile station (MS), a mobile terminal (MT), a remote station, a remote terminal, a mobile device, a user terminal, a wireless communication device, a user agent, or a user apparatus. The terminal may be stationary or mobile.

As an example but not a limitation, in the embodiments of the present disclosure, the network device may be a wearable device. The wearable device, which may also be referred to as a wearable smart device, is a general term for devices that are wearable and developed through smart design of daily wear using the wearable technology, such as glasses, gloves, watches, clothing, and shoes. The wearable device is a portable device that is worn directly on the body of a user or integrated into clothing or accessories of a user. The wearable device is not merely a hardware device, but rather achieves powerful functions via software support, data interaction, and cloud interaction. In a broad sense, wearable smart devices include devices that feature full-functionality and large size, and are capable of implementing complete or partial functions without relying on smart phones, such as smart watches or smart glasses; and devices that are dedicated to only a specific type of application function and need to be used in conjunction with other devices such as smart phones, such as various smart bands or smart jewelry for vital sign monitoring.

### XR service and resource scheduling

XR is regarded as a technology with significant potential, and advancing its large-scale application is poised to become a typical application in future communications. Therefore, support for XR services in a wireless communication system is an important aspect of system design.

The XR may include one or more of: augmented reality (AR), mixed reality (MR), or virtual reality (VR).

A high data rate is one of the important features of XR services. With the continuous development of the wireless cellular communication technology, particularly the development of the 5G technology, spectral efficiency is becoming increasingly high, available frequency bands are becoming wider, and data rates are becoming larger. Therefore, supporting XR services using the cellular communication technology is gradually becoming feasible. However, the XR services involve a large volume of data and impose stringent requirements for transmission delays. Therefore, to avoid a transmission delay for an XR service, it is necessary to report relevant parameters of the XR service to a base station to assist the base station in determining a more suitable scheduling strategy.

The relevant parameters of the XR service may be classified into: data volume-related parameters, delay-related parameters, timing-related parameters, and other parameters. The data volume-related parameters may include an average data volume, a maximum data volume, and the like. The delay-related parameters may include a maximum allowable delay and the like. The timing-related parameters may include a timing of arrival of data at an access stratum, a period, a jitter time range, and the like. The other parameters include, for example, a protocol data unit (PDU) setting importance parameter.

Regarding the four categories of parameters mentioned above, the data volume-related parameters, the delay-related parameters, and the other parameters may be notified to the base station by a core network control element, without requiring transmission over an air interface.

In the timing-related parameters, the period depends on the features of the XR service, such as a sampling rate, and thus the period typically does not change over time. Therefore, the period may also be notified to the base station by the core network control element. The timing of arrival of data at the access stratum may be categorized into: a timing of arrival of uplink (UL) data at an access stratum of the terminal device, and a timing of arrival of downlink (DL) data at an access stratum of the base station. Currently, the 3GPP has decided that the timing of arrival of the uplink data at the access stratum of the terminal device is reported by the terminal device to the base station via a UAI message; and which network element is to notify the timing of arrival of the downlink data at the access stratum of the base station has not yet been determined. Regarding the jitter range, the jitter range of uplink data depends on an encoding speed of each video frame by an internal XR encoder of the terminal device, and thus may only be reported by the terminal device to the base station. The jitter range of downlink data depends on an encoding speed at a server side and the link required for data transmission from an XR server to the base station, and therefore, may also be notified to the base station by a network device.

Based on the above, among the relevant parameters of the XR service, the timing of arrival of the uplink data at the access stratum and the jitter range may be reported by the terminal device to the base station via the UAI message. The procedure of a UAI message is described below by way of example with reference to FIG. 2.

Referring to FIG. 2, the procedure of a terminal device reporting a UAI message to a base station may include steps S210 to S230. In step S210, the base station transmits an RRC reconfiguration request message to the terminal device, wherein the RRC reconfiguration request message is used to configure radio resources for the terminal device. In step S220, the terminal device transmits an RRC reconfiguration complete message to the base station, wherein the RRC reconfiguration complete message is used to notify the base station that an RRC reconfiguration procedure is complete. Upon completion of the RRC reconfiguration procedure, the terminal device determines whether to report a UAI message. In a case where a UAI message needs to be reported, as illustrated in step S230, the terminal device reports the UAI message to the base station.

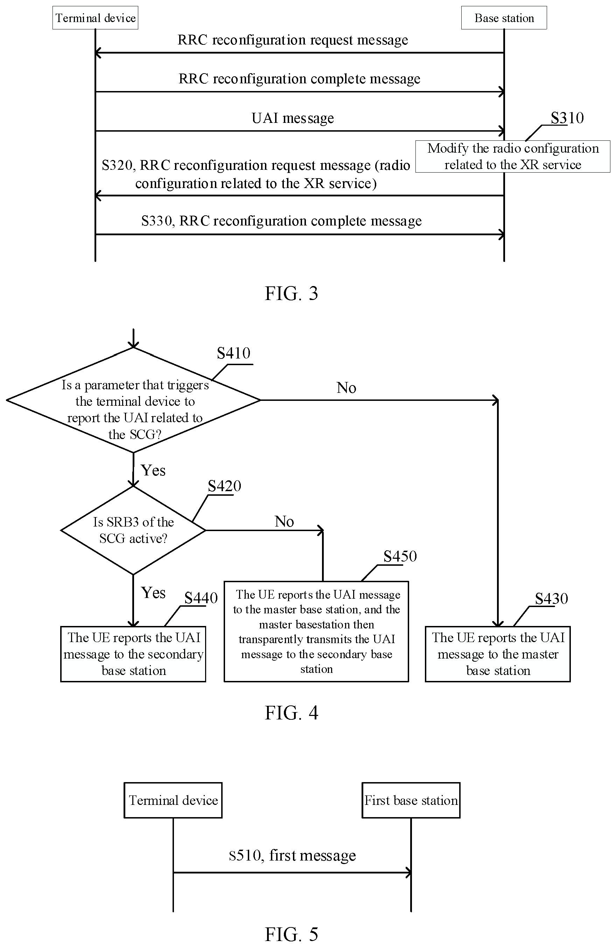

Upon receiving the UAI message from the terminal device, the base station may perform a secondary configuration of the radio resources for the XR service based on parameters related to the XR service in the UAI message. For example, through the secondary configuration, the base station indicates to the terminal device a specific time-domain position of the radio resources to be used to transmit the XR service. Using FIG. 3 as an example, after the terminal device completes the procedure of reporting the UAI, steps S310 to S330 may be subsequently performed.

In step S310, the base station modifies the radio configuration related to the XR service.

In step S320, the base station transmits the RRC reconfiguration request message to the terminal device, which includes the modified radio configuration related to the XR service.

In step S330, the terminal device transmits the RRC reconfiguration complete message to the base station, indicating that the reconfiguration procedure is complete.

### Reporting of UAI message in dual-connectivity scenario

In the dual-connectivity scenario illustrated in FIG. 1, a terminal device is configured with a master base station and a secondary base station, corresponding to a master cell group (MCG) and a secondary cell group (SCG) respectively. When reporting a UAI message, the terminal device may report the UAI message to the base station corresponding to the MCG or corresponding the SCG, i.e., to the master base station or the secondary base station. The procedure of reporting the UAI message in the dual-connectivity scenario is described hereinafter with reference to FIG. 4.

Referring to FIG. 4, in step S410, whether a parameter that triggers the terminal device to report the UAI is related to the SCG is determined. In a case where the parameter is related to the SCG, the procedure proceeds to step S420; otherwise, the procedure proceeds to step S430.

In step S420, whether signaling radio bearer 3 (SRB3) of the SCG is active is determined. In a case where SRB3 of the SCG is active, the procedure proceeds to step S440; otherwise, the procedure proceeds to step S450.

In step S430, the terminal device reports the UAI message to the base station corresponding to the MCG.

In step S440, the terminal device reports the UAI message to the base station corresponding to the SCG.

In step S450, the terminal device reports the UAI message to the base station corresponding to the MCG, and the master base station then transparently transmits the UAI message to the secondary base station.

However, when the terminal device reports parameters related to an XR service via the UAI message, the terminal device does not know whether the XR service is configured on the MCG or the SCG. As a result, the terminal device does not know to which base station the UAI message is to be reported. Where the terminal device and the base station have inconsistent understanding, communication errors may occur. For example, the MCG may configure radio resources for the XR service, but may not explicitly indicate which XR service the radio resources are to be used to transmit. Meanwhile, the terminal device may report the UAI message for the XR service to the SCG. Consequently, the MCG fails to timely adjust the radio resources for the XR service based on the UAI message.

Regarding the above problem, some embodiments of the present disclosure are described in detail hereinafter.

### First Embodiments

FIG. 5 is a schematic flowchart of a method for wireless communication according to some embodiments of the present disclosure. The method illustrated FIG. 5 may be performed by a terminal device. The terminal device is configured with an MCG and an SCG.

Referring to FIG. 5, in step S510, the terminal device transmits a first message to a first base station. The first message includes first information, wherein the first information is associated with a first XR service.

In some implementations, the first information may be a parameter associated with the first XR service.

In some implementations, the first message may be a UAI message.

In some implementations, the first base station is a master base station corresponding to the MCG, for example, a base station 101 illustrated in FIG. 1.

In some implementations, the first base station is a secondary base station corresponding to the SCG, for example, a base station 102 or a base station 105 illustrated in FIG. 1.

In some implementations, the first base station is the master base station and the secondary base station. That is, the terminal device transmits the first message to both the master base station and the secondary base station.

The method illustrated in FIG. 5 clarifies the base station to which the terminal device reports service-related parameters in a dual-connectivity scenario, thereby helping to avoid communication errors.

In some implementations, the first base station is the base station corresponding to a first resource parameter. The first resource parameter may be used to transmit the first XR service.

In some implementations, the first resource parameter may be a CG resource parameter.

In some implementations, an association between the first resource parameter and the first XR service is indicated by an RRC reconfiguration message. For example, the master base station or the secondary base station may configure one or more sets of uplink resource parameters in the RRC reconfiguration message, and indicate an association between the one or more sets of uplink resource parameters and one or more XR services (i.e., indicating which set of uplink resource parameters is configured for which XR service).

In some implementations, the terminal device may determine the first base station based on the association between the first resource parameter and the first XR service indicated in the RRC reconfiguration message. For example, in a case where the terminal device determines that the first XR service corresponds to the first resource parameter, the terminal device may determine whether the first resource parameter corresponds to the master base station (or the MCG) or the secondary base station (or the SCG). In a case where the first resource parameter corresponds to the master base station, the terminal device may transmit the first message to the master base station (in this case, the first base station is the master base station). In a case where the first resource parameter corresponds to the secondary base station, the terminal device may transmit the first message to the secondary base station (in this case, the first base station is the secondary base station).

In some implementations, in a case where only one of the master base station and the secondary base station is configured with the CG resource parameter, the first base station is the base station configured with the CG resource parameter in the master base station and the secondary base station. In a case where only one base station is configured with the CG resource parameter, the terminal device may assume by default that the base station configured with the CG resource parameter may be used to transmit the first XR service, and therefore, the terminal device may directly transmit the first message (including parameters related to the first XR service) to the base station configured with the CG resource parameter.

In some implementations, the first base station is determined based on second information transmitted by the master base station, wherein the second information is used to indicate that the first XR service is configured in the MCG; or the first base station is determined based on second information transmitted by the master base station, wherein the second information is used to indicate that the first XR service is configured in the SCG; or the first base station is determined based on second information transmitted by the secondary base station, wherein the second information is used to indicate that the first XR service is configured in the MCG; or the first base station is determined based on second information transmitted by the secondary base station, wherein the second information is used to indicate that the first XR service is configured in the SCG. For example, in a case where the second information indicates that the first XR service is to be configured in the MCG, the terminal device may determine that the first base station is the master base station corresponding to the MCG and transmit the first message to the master base station. Still for example, in a case where the second information indicates that the first XR service is to be configured in the SCG, the terminal device may determine that the first base station is the secondary base station corresponding to the SCG and transmit the first message to the secondary base station.

In some implementations, in a case where the first XR service is configured in the SCG and the SCG is in an inactive state (the SCG being in an inactive state may mean that SRB3 of the SCG is not activated), the first message is transmitted transparently to the secondary base station via the master base station. For example, when the aforementioned second information indicates that the first XR service is configured in the SCG and the SCG is not activated, the terminal device may transmit the first message to the master base station for transparent transmission to the secondary base station. In this way, delays in the transmission of the first message due to the secondary cell group being in an inactive state may be avoided.

In some implementations, the second information is carried in an RRC message, a medium access control (MAC) control element (CE), a Packet Data Convergence Protocol (PDCP) control protocol data unit (PDU), or an application layer message.

In some implementations, the second information occupies one or more bits including a first value and a second value. The first value is used to indicate that the first XR service is configured in the MCG (or the master base station), and the second value is used to indicate that the first XR service is configured in the SCG (or the secondary base station). For example, the second information may be a Boolean variable, and the first value is 0 and the second value is 1. In a case where the value of the second information is 0, the first XR service is configured in the MCG; or in a case where the value of the second information is 1, the first XR service is configured in the SCG.

In some implementations, in a case where the terminal device is configured with a plurality of SCGs, the second information is further used to indicate a target SCG, among the plurality of SCGs, in which the first XR service is configured (i.e., explicitly indicating in which of the plurality of SCGs the first XR service is configured), and the first base station is the base station corresponding to the target SCG.

In some implementations, in a case where there are a plurality of XR services, the second information may also be used to indicate in which cell group different XR services are respectively configured. For example, the second information indicates that the first XR service is configured in the MCG, and a second XR service is configured in the SCG. The terminal device may transmit parameters related to the first XR service to the base station corresponding to the MCG via the first message, and transmit parameters related to the second XR service to the base station corresponding to the SCG.

In some implementations, the first base station may be determined based on an implementation of the terminal device. That is, the terminal device may autonomously determine, according to actual needs, whether to transmit the first message to the master base station or to the secondary base station. For example, the terminal device may autonomously decide to transmit the first message to the master base station, or to the secondary base station, or to both the master base station and the secondary base station.

In some implementations, the first base station may be specified by a protocol.

In some implementations, the first base station corresponds to a cell group with the larger cell bandwidth from the MCG and the SCG. The cell group with a larger bandwidth supports a higher transmission rate and is more suitable for transmitting the XR service.

In some implementations, the first base station corresponds to a cell group from the MCG and the SCG. The cell group is located in frequency range 2 (FR2). For example, in a case where the MCG is located in FR2, the master base station may be used as the first base station, and thus the first message is transmitted to the master base station. Still for example, in a case where the secondary cell group is located in FR2, the secondary base station may be used as the first base station, and thus the first message is transmitted to the secondary base station. Cells in FR2 have a larger bandwidth and a higher data transmission rate, and are thus more suitable for transmitting the XR service.

In some implementations, the first message includes third information. The third information is used to indicate a preference of the terminal device to transmit the first XR service via the master base station or the secondary base station. For example, the terminal device may use the third information to indicate to the first base station its preference to transmit the first XR service via the MCG (or the master base station). The introduction of the third information helps the base station to configure or schedule the transmission of the first XR service according to the preference of the terminal device. Furthermore, in a case where there are a plurality of XR services, the terminal device may also use the third information to indicate via which one of the master base station or the secondary base station the terminal device prefers to transmit the XR service.

In some implementations, the first information (i.e., the parameters related to the first XR service reported to the base station via the UAI) may include one or more of: a timing of arrival of uplink data at an access stratum of the terminal device; or a jitter time range of uplink data.

In some implementations, the timing of arrival of the downlink data at the access stratum of the base station may be notified to the base station by a core network or an XR server, instead of being reported via the first message. However, the core network and the XR server do not know a correspondence between radio frame numbers and subframe numbers at the base station. In a case where the timing of arrival of the downlink data at the access stratum of the base station access stratum is notified by the core network and the XR server, a notification may only be made using absolute time, that is, a time value common to both parties. This requires the base station and the XR server to maintain synchronized clocks, which is a stringent requirement. In addition, the base station may transmit related parameters of XR services from a plurality of XR servers, and the clocks of these XR servers may differ. The terminal device would need to maintain clocks for the plurality of XR servers, which is complex.

Therefore, in other implementations, the first information may also include the timing of arrival of the downlink data at the access stratum of the base station. That is, the timing of arrival of the downlink data at the access stratum of the base station may also be reported by the terminal device.

In some implementations, in the first information, the timing of arrival of the uplink data at the access stratum of the terminal device and/or the timing of arrival of the downlink data at the access stratum of the base station may be represented using a system frame number (SFN), a subframe number, a symbol number, or the like of a cell. The cell may be a cell in the cell group where the terminal device reports the first information, such as a primary cell (PCell), or may be another cell in the cell group. For example, in a case where the terminal device reports the first information to the MCG, the cell refers to a cell within the MCG. However, in a case where the terminal device intends to report the first information to the SCG and forward the first information to the MCG via the SCG, while the XR service is ultimately still transmitted via the MCG, the cell is a cell in the MCG. Still for example, in a case where the terminal device reports the first information to the SCG, the cell refers to a cell within the SCG. However, in a case where the SCG is not yet activated, when the terminal device intends to report the first information to the MCG and forward the first information to the SCG via the MCG, while the XR service is ultimately still transmitted by the SCG, the cell is a cell in the SCG.

In some implementations, in the first information, the timing of arrival of the uplink data at the access stratum of the terminal device and/or the timing of arrival of the downlink data at the access stratum of the terminal device may also be represented using absolute time.

In other implementations, in the first information, the timing of arrival of the uplink data at the access stratum of the terminal device and/or the timing of arrival of the downlink data at the access stratum of the terminal device may also be represented using relative time. For example, the relative time may be a time difference between a transmission instant of the first message and the timing of arrival of the uplink data (or downlink data) at the access stratum of the terminal device.

### Second Embodiments

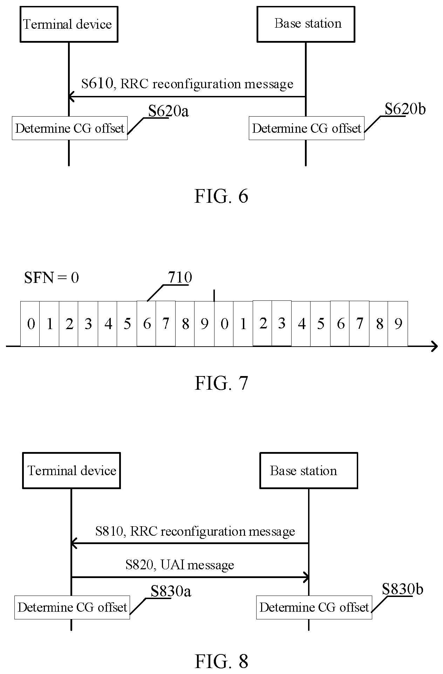

A secondary configuration procedure for the XR service has been described previously with reference to FIG. 3. The secondary configuration procedure for the XR service is relatively complex and may cause a waste of resources. In response to this problem, second embodiments of the present disclosure are described in detail hereinafter with reference to FIG. 6.

FIG. 6 is a schematic flowchart of a method for wireless communication according to some embodiments of the present disclosure. The method illustrated in FIG. 6 may be applied in a normal communication scenario, and may also be applied in the dual-connectivity scenario illustrated in FIG. 1.

Referring to FIG. 6, in step S610, a terminal device receives an RRC reconfiguration message from a base station. The RRC reconfiguration message includes a first CG resource parameter. The first CG resource parameter is used to transmit a first XR service, but the first CG resource parameter does not include a time-domain offset (or a time-domain offset parameter) of the first CG resource. That is, the base station may indicate, via the RRC reconfiguration message, to the terminal device that the first CG resource is a CG resource configured for the first XR service, but does not indicate the time-domain offset of the first CG resource.

In step S620a, the terminal device determines the time-domain offset of the first CG resource based on a timing of arrival of service data of the first XR service at an access stratum.

In some implementations, the terminal device may determine, based on a predetermined rule, the time-domain offset of the first CG resource according to the timing of arrival of the service data of the first XR service at the access stratum. For example, in a case where a period of the first CG resource is 16 ms, and frame and subframe information for a timing of arrival of uplink data at the access stratum is: SFN=0, subframe number=6 (referring to 710 in FIG. 7), the terminal device may determine that the time-domain offset of the first CG resource is 6.

In step S620b, the base station determines the time-domain offset of the first CG resource based on the timing of arrival of the service data of the first XR service at the access stratum. The base station may determine the time-domain offset of the first CG resource in a manner similar to that adopted by the terminal device, which is not described herein any further.

In the second embodiments of the present disclosure, the terminal device and the base station may autonomously determine the time-domain offset of the CG resource corresponding to the XR service, thereby eliminating the need for a secondary configuration. This simplifies the secondary configuration procedure for the XR service and avoids the waste of resources.

In some implementations, upon receiving the RRC reconfiguration message, the terminal device may transmit an RRC reconfiguration complete message to the base station.

In some implementations, as illustrated in FIG. 8, the method further includes step S820. In step S820, the terminal device transmits a UAI message to the base station. The UAI message includes first information. The first information indicates the timing of arrival of the service data of the first XR service at the access stratum. The timing of arrival of the service data of the first XR service at the access stratum in step S620b may be determined by the base station based on the first information.

In some implementations, the first information is used to indicate one or more of: a timing of arrival of uplink data at an access stratum of the terminal device; and a timing of arrival of downlink data at an access stratum of a base station.

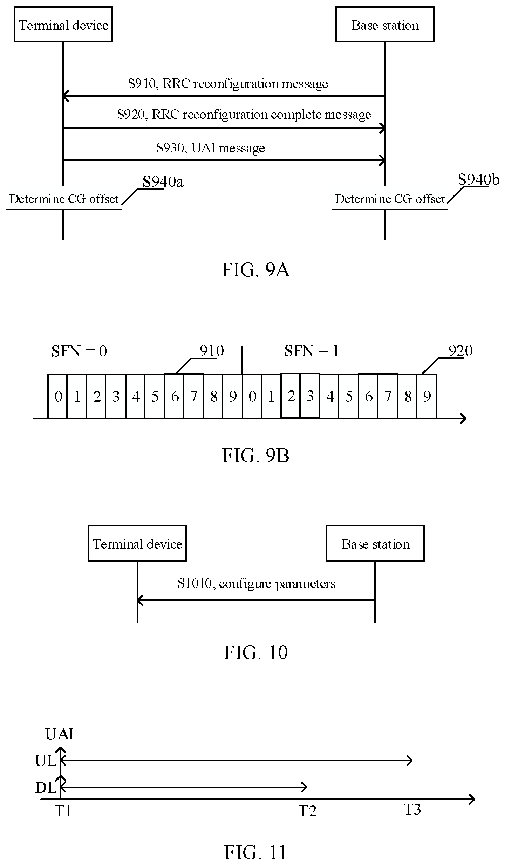

The method for wireless communication according to the second embodiments of the present disclosure is not described in greater detail with reference to the specific examples in FIG. 9A and FIG. 9B. It should be noted that the examples of FIG. 9A and FIG. 9B are merely intended to help a person skilled in the art to understand the embodiments of the present disclosure, and are not intended to limit the embodiments of the present disclosure to the specific values or scenarios illustrated. A person skilled in the art may obviously make various equivalent modifications or variations based on the given examples in FIG. 9A and FIG. 9B, and such modifications or variations also fall within the scope of the embodiments of the present disclosure.

As illustrated in FIG. 9A, in step S910, the base station transmits an RRC reconfiguration message to the terminal device. The RRC reconfiguration message configures a first CG resource for a first XR service, but does not indicate a time-domain offset of the first CG resource (assuming that a period of the first CG resource is 16 ms).

In step S920, the terminal device transmits an RRC reconfiguration complete message to the base station to indicate the completion of an RRC reconfiguration procedure.

It should be noted that, in related technologies, the configuration of a CG resource takes effect after the terminal device transmits an RRC reconfiguration complete message to the base station. Differing from related arts, in the embodiments of the present disclosure, after the terminal device transmits the RRC reconfiguration complete message to the base station, the configuration of the first CG resource has not yet taken effect. The configuration may only take effect after the terminal device reports a UAI message to the base station and a time-domain offset of the first CG resource has been determined (see steps S930 to S940).

In step S930, the terminal device reports a UAI message to the base station to indicate a timing of arrival of uplink data of the first XR service at an access stratum.

In steps S940a and S940b, the terminal device and the base station respectively determine the time-domain offset of the first CG resource.

For example, assuming the timing of arrival of the uplink data at the access stratum is a time-domain position indicated by reference numeral 910 in FIG. 9B, i.e., a time-domain position at SFN=0, subframe number=6, then it may be determined that the time-domain offset of the first CG resource is 6.

Still for example, in a case where the timing of arrival of the uplink data at the access stratum is the time-domain position indicated by reference numeral 920 in FIG. 9B, i.e., the time-domain position at SFN=1, subframe number=9, based on the period of 16 ms, the time-domain offset of the first CG resource is determined to be 3.

### Third embodiments

As described previously, after the terminal device transmits a UAI message to the base station, the base station adjusts the resources used for transmitting the first XR service based on the first information in the UAI message. However, in a case where the terminal device frequently reports the first information to the base station, a waste of radio resources may be caused

Based on the above problem, the present disclosure provides another method for wireless communication.

The method for wireless communication according to the third embodiments of the present disclosure is not described in detail with reference to FIG. 10. The method includes step S1010. In step S1010, the terminal device receives a configuration parameter from the base station. The configuration parameter is used to configure a prohibit timer. The prohibit timer is used to prohibit reporting of the first information. For example, while the prohibit timer is running, the terminal device is not allowed to report the first information to the base station; after the prohibit timer expires, the terminal device may report the first information to the base station. Configuring a prohibit timer when the terminal device reports a UAI message helps to prevent the terminal device from frequently reporting the first information to the base station and from wasting radio resources. In a case where the content reported in the UAI message comes from the application layer of the terminal device, but the application layer is not aware that the base station has configured a prohibit timer, a situation may occur where the application layer frequently instructs the access stratum to modify the first information, but the access stratum is unable to report the first information. Therefore, in some implementations, the terminal device transmits indication information the application layer of the terminal device. The indication information is used to indicate a value of the prohibit timer. Indicating a value of the prohibit timer to the application layer of the terminal device avoids the situation where the application layer frequently provides notifications regarding the first information.

In some implementations, the method as illustrated in FIG. 10 further includes: in a case where the base station reconfigures a resource parameter for a first XR service, transmitting, by the terminal device, a first UAI message to the base station, wherein the transmission of the first UAI message is not subject to the prohibit timer. For example, in a case where the base station changes a bearer for the XR service from the SCG to the MCG, the terminal device reports the first UAI message to the base station regardless of whether the prohibit timer has expired.

In some implementations, the prohibit timer includes a first prohibit timer and a second prohibit timer. The first prohibit timer is used to prohibit reporting of first information, and the second prohibit timer is used to prohibit reporting of a second parameter. The first information is used to indicate a timing of arrival of uplink data of the XR service at an access stratum of the terminal device, and the second parameter is used to indicate a timing of arrival of downlink data of the XR service at an access stratum of a base station. Update frequencies of the first information and the second parameter may be different. The update frequency of the first information mainly depends on the encoding and the information source at the terminal device, while the update frequency of the second parameter mainly depends on the encoding speed of the information source encoder and the delay required for data transmission from the XR application server to the base station. Therefore, in a case where the terminal device simultaneously reports the timing of arrival of the uplink data at the access stratum of the terminal device and the timing of arrival of the downlink data at the access stratum of the base station to the base station via the UAI message, reporting of these two parameters (the two timings) may be controlled by independent prohibit timers, thereby increasing flexibility.

As an example, the relationship between values of the first prohibit timer and the second prohibit timer may be as illustrated in FIG. 11. T1 represents an instant when the terminal device reports the UAI message to the base station. The UAI message includes the timing of arrival of the uplink data of the XR service at the access stratum of the terminal device and the timing of arrival of the downlink data of the XR service at the access stratum of the base station. T2 represents the value of the first prohibit timer, and T3 represents the value of the second prohibit timer. In this case, the terminal device may only report the timing of arrival of the uplink data of the XR service at the access stratum of the terminal device again after time T2, and may only report the timing of arrival of the downlink data of the XR service at the access stratum of the base station again after time T3. Therefore, in an interval between time T2 and T3, the terminal device may report the timing of arrival of the uplink data at the access stratum of the terminal device to the base station again. In this way, the utilization of the transmission resources for the XR service is increased, and thus the transmission of the XR service is more flexible.

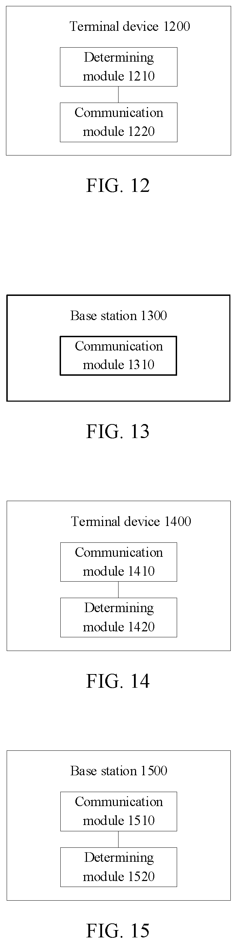

The above sections, with reference to FIG. 1 to FIG. 11, describe in detail the method embodiments of the present disclosure. The following sections, with reference to FIG. 12 to FIG. 18, describe in detail the apparatus embodiments of the present disclosure. It should be understood that the description of the method embodiments corresponds to the description of the apparatus embodiments, such that the parts that are not described in detail may be referred to the preceding method embodiments.

As illustrated in FIG. 12, some embodiments of the present disclosure provide a terminal device 1200. The terminal device 1200 includes a determining module 1210 and a communication module 1220. The determining module 1210 is configured to determine a first base station. The communication module 1220 is configured to transmit a first message to the first base station. The first message includes first information, wherein the first information is associated with a first XR service. The terminal device is configured with a master cell group and a secondary cell group; the first base station is a master base station corresponding to the master cell group; and/or the first base station is a secondary base station corresponding to the secondary cell group.

In some implementations, the first message may be a UAI message.

In some implementations, the first base station is a base station corresponding to a first resource parameter. The first resource parameter is used to transmit the first XR service.

In some implementations, an association between the first resource parameter and the first XR service is indicated by an RRC reconfiguration message.

In some implementations, in a case where only one of the master base station and the secondary base station is configured with the CG resource parameter, the first base station is the base station configured with the CG resource parameter in the master base station and the secondary base station.

In some implementations, the first base station is determined based on second information transmitted by the master base station, wherein the second information is used to indicate that the first XR service is configured in the MCG; or the first base station is determined based on second information transmitted by the master base station, wherein the second information is used to indicate that the first XR service is configured in the SCG; or the first base station is determined based on second information transmitted by the secondary base station, wherein the second information is used to indicate that the first XR service is configured in the MCG; or the first base station is determined based on second information transmitted by the secondary base station, wherein the second information is used to indicate that the first XR service is configured in the SCG. In some implementations, in a case where the first XR service is configured in the SCG and the SCG is in an inactive state, the first message is transmitted transparently to the secondary base station via the master base station.

In some implementations, the second information is carried in an RRC message, a MAC CE, a PDCP control PDU, or an application layer message.

In some implementations, the second information occupies one or more bits including a first value and a second value. The first value is used to indicate that the first XR service is configured in the MCG, and the second value is used to indicate that the first XR service is configured in the SCG.

In some implementations, in a case where the terminal device is configured with a plurality of SCGs, the second information is further used to indicate a target SCG, among the plurality of SCGs, in which the first XR service is configured, and the first base station is the base station corresponding to the target SCG.

In some implementations, in a case where there are a plurality of XR services, the second information may also be used to indicate in which cell group different XR services are respectively configured.

In some implementations, the first base station is determined by the terminal device based on an implementation of the terminal device, or is specified by a protocol.

In some implementations, the first base station corresponds to a cell group with the larger cell bandwidth from the MCG and the SCG.

In some implementations, the first base station corresponds to a cell group from the MCG and the SCG, wherein the cell group is located in FR2.

In some implementations, the first message includes third information. The third information is used to indicate a preference of the terminal device to transmit the first XR service via the master base station or the secondary base station.

In some implementations, the first information includes one or more of: a timing of arrival of uplink data at an access stratum of the terminal device, a timing of arrival of downlink data at an access stratum of a base station, or a jitter time range of uplink data.

As illustrated in FIG. 13, some embodiments of the present disclosure provide a base station 1300. The base station 1300 is a first base station. The first base station includes a communication module 1310. The communication module 1310 is configured to receive a first message from a terminal device. The first message includes first information, wherein the first information is associated with a first XR service. The terminal device is configured with a master cell group and a secondary cell group; the first base station is a master base station corresponding to the master cell group; and/or the first base station is a secondary base station corresponding to the secondary cell group.

In some implementations, the first message may be a UAI message.

In some implementations, the first base station is a base station corresponding to a first resource parameter. The first resource parameter is used to transmit the first XR service.

In some implementations, an association between the first resource parameter and the first XR service is indicated by an RRC reconfiguration message.

In some implementations, in a case where only one of the master base station and the secondary base station is configured with the CG resource parameter, then the first base station is the base station configured with the CG resource parameter in the master base station and the secondary base station.

In some implementations, the first base station is determined based on second information transmitted by the master base station, wherein the second information is used to indicate that the first XR service is configured in the MCG; or the first base station is determined based on second information transmitted by the master base station, wherein the second information is used to indicate that the first XR service is configured in the SCG; or the first base station is determined based on second information transmitted by the secondary base station, wherein the second information is used to indicate that the first XR service is configured in the MCG; or the first base station is determined based on second information transmitted by the secondary base station, wherein the second information is used to indicate that the first XR service is configured in the SCG. In some implementations, in a case where the first XR service is configured in the SCG and the SCG is in an inactive state, the first message is transmitted transparently to the secondary base station via the master base station.

In some implementations, the second information is carried in an RRC message, a MAC CE, a PDCP control PDU, or an application layer message.

In some implementations, the second information occupies one or more bits including a first value and a second value. The first value is used to indicate that the first XR service is configured in the MCG, and the second value is used to indicate that the first XR service is configured in the SCG.

In some implementations, in a case where the terminal device is configured with a plurality of SCGs, the second information is further used to indicate a target SCG, among the plurality of SCGs, in which the first XR service is configured, and the first base station is the base station corresponding to the target SCG.

In some implementations, in a case where there are a plurality of XR services, the second information may also be used to indicate in which cell group different XR services are respectively configured.

In some implementations, the first base station is determined by the terminal device based on an implementation of the terminal device, or is specified by a protocol.

In some implementations, the first base station corresponds to a cell group with the larger cell bandwidth from the MCG and the SCG.

In some implementations, the first base station corresponds to a cell group from the MCG and the SCG, wherein the cell group is located in FR2.

In some implementations, the first message includes third information. The third information is used to indicate a preference of the terminal device to transmit the first XR service via the master base station or the secondary base station.

In some implementations, the first information includes one or more of: a timing of arrival of uplink data at an access stratum of the terminal device; a timing of arrival of downlink data at an access stratum of a base station; or a jitter time range of uplink data.

As illustrated in FIG. 14, some embodiments of the present disclosure provide a terminal device 1400. The terminal device 1400 includes a communication module 1410 and a determining module 1420. The communication module 1410 is configured to receive an RRC reconfiguration message from a base station. The RRC reconfiguration message includes a first CG resource parameter. The first CG resource parameter is used to transmit a first XR service, but the first CG resource parameter does not include a time-domain offset of the first CG resource. The determining module 1420 is configured to determine the time-domain offset of the first CG resource based on a timing of arrival of service data of the first XR service to an access stratum.

In some implementations, the communication module 1410 is further configured to transmit a UAI message to the base station. The UAI message includes first information. The first information indicates the timing of arrival of the service data of the first XR service at the access stratum.

In some implementations, the first information is used to indicate one or more of: a timing of arrival of uplink data at an access stratum of the terminal device; or a timing of arrival of downlink data at an access stratum of a base station.

As illustrated in FIG. 15, some embodiments of the present disclosure provide a base station 1500. The base station 1500 includes a communication module 1510 and a determining module 1520. The communication module 1510 is configured to transmit an RRC reconfiguration message to a terminal device. The RRC reconfiguration message includes a first CG resource parameter. The first CG resource parameter is used to transmit a first XR service, but the first CG resource parameter does not include a time-domain offset of the first CG resource. The determining module 1520 is configured to determine the time-domain offset of the first CG resource based on a timing of arrival of service data of the first XR service at an access stratum.

In some implementations, the communication module 1510 is further configured to receive a UAI message from the terminal device before the base station determines the time-domain offset of the first CG resource based on the timing of arrival of the service data of the first XR service at the access stratum. The UAI message includes first information. The first information indicates the timing of arrival of the service data of the first XR service at the access stratum.

In some implementations, the first information is used to indicate one or more of: a timing of arrival of uplink data at an access stratum of the terminal device; or a timing of arrival of downlink data at an access stratum of a base station.

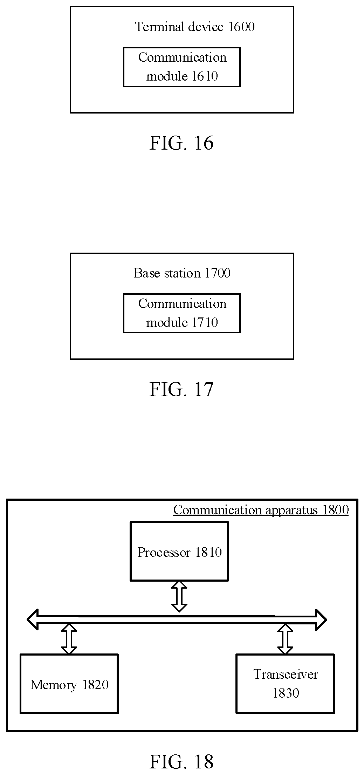

As illustrated in FIG. 16, some embodiments of the present disclosure provide a terminal device 1600. The terminal device 1600 includes a communication module 1610. The communication module 1610 is configured to receive a configuration parameter from a base station. The configuration parameter is used to configure a prohibit timer. The prohibit timer is used to prohibit reporting of first information.

In some implementations, the communication module 1610 is further configured to transmit indication information to an application layer of the terminal device 1600. The indication information is used to indicate a value of the prohibit timer.

In some implementations, in a case where the base station reconfigures a resource parameter for a first XR service, the communication module 1610 is further configured to transmit a first UAI message to the base station, wherein the transmission of the first UAI message is not subject to the prohibit timer.

In some implementations, the prohibit timer includes a first prohibit timer and a second prohibit timer. The first prohibit timer is used to prohibit reporting of first information, and the second prohibit timer is used to prohibit reporting of a second parameter. The first information is used to indicate a timing of arrival of uplink data of the XR service at an access stratum of the terminal device, and the second parameter is used to indicate a timing of arrival of downlink data of the XR service at an access stratum of a base station.

As illustrated in FIG. 17, some embodiments of the present disclosure provide a base station 1700. The base station 1700 is a first base station 17. The first base station 17 includes a communication module 1710. The communication module 1710 is configured to transmit a configuration parameter to a terminal device. The configuration parameter is used to configure a prohibit timer. The prohibit timer is used to prohibit reporting of first information.

In some implementations, the prohibit timer includes a first prohibit timer and a second prohibit timer. The first prohibit timer is used to prohibit reporting of first information, and the second prohibit timer is used to prohibit reporting of a second parameter. The first information is used to indicate a timing of arrival of uplink data of the XR service at an access stratum of the terminal device, and the second parameter is used to indicate a timing of arrival of downlink data of the XR service at an access stratum of a base station.

FIG. 18 is a schematic structural diagram of a communication apparatus 1800 according to an embodiment of the present disclosure. The communication apparatus 1800 in FIG. 18 may be employed to perform the method according to the above method embodiments. The communication apparatus 1800 may be a chip, a terminal device, or a base station.

The communication apparatus 1800 may include one or more processors 1810. The processor 1810 may support implementation of the method according to the above method embodiments by the communication apparatus 1800. The processor 1810 may be a general purpose processor or an application-specific processor. For example, the processor may be a central processing unit (CPU). The processor may be a general processor, a digital signal processor (DSP), an application-specific integrated circuit (ASIC), a field-programmable gate array (FPGA) or another programmable logic device, a discrete gate or transistor logic device, or a discrete hardware component, or the like. The general-purpose processor may be a microprocessor or any customary processor or the like.

The communication apparatus 1800 may further include one or more memories 1820. The memory 1820 has stored thereon a program that is executable by the processor 1810 to cause the processor 1810 to perform the method described in the above method embodiments. The memory 1820 may be separate from the processor 1810 or integrated within the processor 1810.

The communication apparatus 1800 may also include a transceiver 1830. The processor 1810 may communicate with other devices or chips by the transceiver 1830. For example, the processor 1810 may communicate (transmit and receive) data with other devices or chips by the transceiver 1830.

It should be understood that in the embodiments of the present disclosure, the processor 1810 may be a central processing unit (CPU), a micro-processor, an application-specific integrated circuit (ASIC), or one or more integrated circuits, configured to load and run one or more related programs to perform the technical solutions according to the embodiments of the present disclosure.

The memory 1820 may include a read-only memory and a random access memory, and provide instructions and data to the processor 1810. A portion of the processor 1810 may further include a non-volatile random access memory (NVRAM). For example, the processor 1810 may also store type information of storage devices.

During the implementation, various steps in the above method may be performed by means of an integrated logic circuit in the processor 1810 or by means of instructions. The method for wireless communication according to the embodiments of the present disclosure may be directly reflected as being practiced by a processor, or practiced by a software module plus hardware in the processor. The software module may be located in a random memory, a flash memory, a read-only memory, a programmable read-only memory, an electrically erasable programmable memory, a register or the like storage medium commonly known in the art. The storage medium is within the memory 1820. The processor 1810 reads the information stored in the memory 1820 and performs the steps of the above method in combination with the hardware thereof. For brevity of description, the details are not given herein any further.

It should be understood that in the embodiments of the present disclosure, the processor 1810 may be a central processing unit (CPU), or may be a general purpose processor, a digital signal processor (DSP), an application specific integrated circuit (ASIC), a field-programmable gate array (FPGA), or a programmable logic device, a discrete gate or transistor logic device, a discrete hardware component, or the like. The general-purpose processor may be a microprocessor or any customary processor or the like.

Some embodiments of the present disclosure further provide a computer-readable storage medium configured to store one or more programs. The computer-readable storage medium may be applied to the terminal device or the base station according to the embodiments of the present disclosure, and the computer program causes a computer to perform the methods for wireless communications according to the embodiments of the present disclosure.

Some embodiments of the present disclosure further provide a computer program product. The computer program product includes one or more programs. The computer program product may be applied to the terminal device or the base station according to the embodiments of the present disclosure, and the one or more computer programs cause a computer to perform the methods for wireless communications according to the embodiments of the present disclosure.

Some embodiments of the present disclosure further provide a computer program. The computer program may be applied to the terminal device or the base station according to the embodiments of the present disclosure, and the computer program causes a computer to perform the methods for wireless communications according to the embodiments of the present disclosure.

It should be understood that in the embodiments of the present disclosure, the expression "B corresponding to A" means that B is associated with A, from which B may be determined. However, it should also be understood that determining B from A does not mean determining B from A alone, and B may also be determined from A and/or other information.

The term "and/or" is merely an association relationship for describing associated objects, which represents that there may exist three types of relationships. For example, the phrase "A and/or B" may indicate (A), (B), or (A and B). In addition, the forward-slash symbol "/" generally represents an "or" relationship between associated objects before and after the symbol.

It should be understood that in various embodiments of the present disclosure, the sequence numbers of the above various processes or steps do not denote a preferred sequence of performing the processes or steps; and the sequence of performing the processes and steps should be determined according to the functions and internal logics thereof, which shall not cause any limitation to the implementation process of the embodiments of the present disclosure.

In the several embodiments provided in the present disclosure, it should be understood that the disclosed system, apparatus and method may be practiced in other manners. The above described device embodiments are merely illustrative. For example, the unit division is merely logical function division and may be other divisions in actual practice. For example, a plurality of units or components may be combined or integrated into another device, or some features may be ignored or not performed. Additionally, the displayed or discussed mutual couplings or direct couplings or communication connections may be implemented through some interfaces. The indirect couplings or communication connections between the devices or units may be implemented in electronic, mechanical or other forms.

The units which are described as separate components may be physically separated or may be not physically separated, and the components which are illustrated as units may be or may not be physical units, that is, the components may be located in the same position or may be distributed into a plurality of network units. Some of or all of the units may be selected according to actual needs to achieve the objectives of the solutions of the embodiments.

In addition, functional units in the embodiments of the present disclosure may be integrated into one processing unit, or each of the units may exist along physically, or two or more units may be integrated into one unit.

In the above embodiments, the technical solutions may be totally or partially practiced by software, hardware, firmware or any combination thereof. During practice by software, the technical solutions may be totally or partially implemented in the form of a computer program product. The computer program product includes one or a plurality of computer-executable instructions. The computer program instructions, when loaded and executed on a computer, may cause the computer to totally or partially perform the procedures or functions in the embodiments of the present disclosure. The computer may be a general computer, a dedicated computer, a computer network, or another programming device. The computer-executable instructions may be stored in a computer-readable storage medium, or transferred from one computer-readable storage medium to another. For example, the computer-executable instructions may be transmitted from one website, computer, server or data center to another in a wired fashion, for example, a coaxial cable, an optical fiber, a digital subscriber line (DSL) or a wireless fashion, for example, an infrared ray, a radio, a microwave or the like. The computer-readable storage medium may be any available medium that is accessible or a data storage device such as a server, a data center or the like integrated with one or a plurality of available media. The available medium may be a magnetic medium, for example, a floppy disk, a hard disk or a magnetic tape, an optical medium, for example, a digital versatile disc (DVD), or a semiconductor medium, for example, a solid state disk (SSD) or the like.

The above embodiments are used only for illustrating the present disclosure, but are not intended to limit the protection scope of the present disclosure. Various modifications and replacements readily derived by those skilled in the art within technical disclosure of the present disclosure shall fall within the protection scope of the present disclosure.

## Claims

1. A method for wireless communication, comprising:
determining, by a terminal device, a first base station; and
transmitting, by the terminal device, a first message to the first base station, wherein the first message comprises first information, the first information being associated with a first extended reality (XR) service;
wherein the terminal device is configured with a master cell group and a secondary cell group; the first base station is a master base station corresponding to the master cell group; and/or the first base station is a secondary base station corresponding to the secondary cell group.

2. The method according to claim 1, wherein the first base station is a base station corresponding to a first resource parameter, wherein the first resource parameter is used to transmit the first XR service.

3. The method according to claim 2, further comprising:
receiving, by the terminal device, the first resource parameter from a base station, wherein the first resource parameter is a first configured grant (CG) resource parameter, the first CG resource parameter not comprising a time-domain offset of the first CG resource; and
determining, by the terminal device, the time-domain offset of the first CG resource based on the first information.

4. The method according to claim 2, wherein an association between the first resource parameter and the first XR service is indicated by a radio resource control (RRC) reconfiguration message.

5. The method according to claim 1, wherein in a case where only one of the master base station and the secondary base station is configured with a configured grant (CG) resource parameter, the first base station is a base station configured with the CG resource parameter among the master base station and the secondary base station.

6. The method according to claim 1, wherein
the first base station is determined based on second information transmitted by the master base station, wherein the second information is used to indicate that the first XR service is configured in the master cell group; or
the first base station is determined based on second information transmitted by the master base station, wherein the second information is used to indicate that the first XR service is configured in the secondary cell group; or
the first base station is determined based on second information transmitted by the secondary base station, wherein the second information is used to indicate that the first XR service is configured in the master cell group; or
the first base station is determined based on second information transmitted by the secondary base station, wherein the second information is used to indicate that the first XR service is configured in the secondary cell group.

7. The method according to claim 6, wherein in a case where the first XR service is configured in the secondary cell group and the secondary cell group is in an inactive state, the first message is transmitted transparently to the secondary base station via the master base station.

8. The method according to claim 6 or 7, wherein the second information is carried in a radio resource control (RRC) message, a medium access control (MAC) control element (CE), a Packet Data Convergence Protocol (PDCP) control protocol data unit (PDU), or an application layer message.

9. The method according to any one of claims 6 to 8, wherein the second information occupies one or more bits, the one or more bits comprising a first value and a second value, wherein the first value is used to indicate that the first XR service is configured in the master cell group, and the second value is used to indicate that the first XR service is configured in the secondary cell group.

10. The method according to any one of claims 6 to 9, wherein in a case where the terminal device is configured with a plurality of secondary cell groups, the second information is further used to indicate a target secondary cell group, among the plurality of secondary cell groups, in which the first XR service is configured, and the first base station is a base station corresponding to the target secondary cell group.

11. The method according to claim 1, wherein the first base station is determined by the terminal device based on an implementation of the terminal device, or is specified by a protocol.

12. The method according to claim 1 or 11, wherein the first base station corresponds to a cell group with a larger cell bandwidth among the master cell group and the secondary cell group.

13. The method according to claim 12, wherein the first base station corresponds to a cell group located in a frequency range 2 among the master cell group and the secondary cell group.

14. The method according to any one of claims 1 to 13, wherein the first message comprises third information, wherein the third information is used to indicate a preference of the terminal device to transmit the first XR service via the master base station or the secondary base station.

15. The method according to any one of claims 1 to 14, wherein the first information comprises one or more of:
a timing of arrival of uplink data at an access stratum of the terminal device;
a timing of arrival of downlink data at an access stratum of a base station; or
a jitter time range of uplink data.

16. The method according to claim 1, wherein before transmitting, by the terminal device, the first message to the first base station, the method further comprises:
transmitting, by the terminal device, indication information to an application layer of the terminal device, wherein the indication information is used to indicate a value of a prohibit timer, the prohibit timer being configured to prohibit reporting of the first information.

17. The method according to claim 1, further comprising:
in a case where a base station reconfigures a resource parameter for the first XR service, transmitting, by the terminal device, the first message to the base station, wherein the transmission of the first message is not subject to a prohibit timer.

18. The method according to claim 1, wherein prohibit timers configured for the terminal device comprise a first prohibit timer and a second prohibit timer;
wherein the first prohibit timer is configured to prohibit reporting of a timing of arrival of uplink data of the first XR service at an access stratum of the terminal device, and the second prohibit timer is configured to prohibit reporting of a timing of arrival of downlink data of the first XR service at an access stratum of a base station.

19. A method for wireless communication, comprising:
receiving, by a first base station, a first message from a terminal device, wherein the first message comprises first information, the first information being associated with a first extended reality (XR) service;
wherein the terminal device is configured with a master cell group and a secondary cell group; the first base station is a master base station corresponding to the master cell group; and/or the first base station is a secondary base station corresponding to the secondary cell group.

20. The method according to claim 19, wherein the first base station is a base station corresponding to a first resource parameter, wherein the first resource parameter is used to transmit the first XR service.

21. The method according to claim 20, further comprising:
transmitting, by the first base station, a radio resource control (RRC) reconfiguration message to the terminal device, wherein the RRC reconfiguration message comprises the first resource parameter, wherein the first resource parameter is a first configured grant (CG) resource parameter, the first CG resource parameter not comprising a time-domain offset of the first CG resource; and
determining, by the first base station, the time-domain offset of the first CG resource based on the first information.

22. The method according to claim 20, wherein an association between the first resource parameter and the first XR service is indicated by a radio resource control (RRC) reconfiguration message.

23. The method according to claim 19, wherein in a case where only one of the master base station and the secondary base station is configured with a configured grant (CG) resource parameter, the first base station is a base station configured with the CG resource parameter among the master base station and the secondary base station.

24. The method according to claim 19, wherein
the first base station is determined based on second information transmitted by the master base station, wherein the second information is used to indicate that the first XR service is configured in the master cell group; or
the first base station is determined based on second information transmitted by the master base station, wherein the second information is used to indicate that the first XR service is configured in the secondary cell group; or
the first base station is determined based on second information transmitted by the secondary base station, wherein the second information is used to indicate that the first XR service is configured in the master cell group; or
the first base station is determined based on second information transmitted by the secondary base station, wherein the second information is used to indicate that the first XR service is configured in the secondary cell group.

25. The method according to claim 24, wherein in a case where the first XR service is configured in the secondary cell group and the secondary cell group is in an inactive state, the first message is transmitted transparently to the secondary base station via the master base station.

26. The method according to claim 24 or 25, wherein the second information is carried in a radio resource control (RRC) message, a medium access control (MAC) control element (CE), a Packet Data Convergence Protocol (PDCP) control protocol data unit (PDU), or an application layer message.

27. The method according to any one of claims 24 to 26, wherein the second information occupies one or more bits, the one or more bits comprising a first value and a second value, wherein the first value is used to indicate that the first XR service is configured in the master cell group, and the second value is used to indicate that the first XR service is configured in the secondary cell group.

28. The method according to any one of claims 24 to 27, wherein in a case where the terminal device is configured with a plurality of secondary cell groups, the second information is further used to indicate a target secondary cell group, among the plurality of secondary cell groups, in which the first XR service is configured, and the first base station is a base station corresponding to the target secondary cell group.

29. The method according to claim 19, wherein the first base station is determined by the terminal device based on an implementation of the terminal device, or is specified by a protocol.

30. The method according to claim 19 or 29, wherein the first base station corresponds to a cell group with a larger cell bandwidth among the master cell group and the secondary cell group.

31. The method according to claim 30, wherein the first base station corresponds to a cell group located in a frequency range 2 among the master cell group and the secondary cell group.

32. The method according to any one of claims 19 to 31, wherein the first message comprises third information, wherein the third information is used to indicate a preference of the terminal device to transmit the first XR service via the master base station or the secondary base station.

33. The method according to any one of claims 19 to 32, wherein the first information comprises one or more of:
a timing of arrival of uplink data at an access stratum of the terminal device;
a timing of arrival of downlink data at an access stratum of a base station; or
a jitter time range of uplink data.

34. The method according to claim 19, wherein the first base station configures a first prohibit timer and a second prohibit timer for the terminal device;
wherein the first prohibit timer is configured to prohibit reporting, via the first message, of a timing of arrival of uplink data at an access stratum of the terminal device, and the second prohibit timer is configured to prohibit reporting of a timing of arrival of downlink data of the first XR service at an access stratum of a base station.

35. A terminal device, comprising:
a determining module, configured to determine a first base station; and
a communication module, configured to transmit a first message to the first base station, wherein the first message comprises first information, the first information being associated with a first extended reality (XR) service;
wherein the terminal device is configured with a master cell group and a secondary cell group; the first base station is a master base station corresponding to the master cell group; and/or the first base station is a secondary base station corresponding to the secondary cell group.

36. A base station, wherein the base station is a first base station, the first base station comprising:
a communication module, configured to receive a first message from a terminal device, wherein the first message comprises first information, the first information being associated with a first extended reality (XR) service;
wherein the terminal device is configured with a master cell group and a secondary cell group; the first base station is a master base station corresponding to the master cell group; and/or the first base station is a secondary base station corresponding to the secondary cell group.

37. A terminal device, comprising: a transceiver, a memory, and a processor, wherein the memory is configured to store one or more programs, and the processor is configured to call the one or more programs stored in the memory and control the transceiver to receive or transmit a signal to cause the terminal device to perform the method as defined in any one of claims 1 to 18.

38. A base station, comprising: a transceiver, a memory, and a processor, wherein the memory is configured to store one or more programs, and the processor is configured to call the one or more programs stored in the memory and control the transceiver to receive or transmit a signal to cause the base station to perform the method as defined in any one of claims 19 to 34.

39. An apparatus, comprising: a processor; wherein the processor is configured to call a program from a memory to perform the method as defined in any one of claims 1 to 18 or any one of claims 19 to 34.

40. A chip, comprising: a processor, wherein the processor is configured to call one or more programs from a memory to cause a device equipped with the chip to perform the method as defined in any one of claims 1 to 18 or any one of claims 19 to 34.

41. A computer-readable storage medium storing one or more programs therein, wherein the one or more programs, when loaded and run by a computer, cause the computer to perform the method as defined in any one of claims 1 to 18 or any one of claims 19 to 34.

42. A computer program product, comprising: one or more programs, wherein the one or more programs, when loaded and run by a computer, cause the computer to perform the method as defined in any one of claims 1 to 18 or any one of claims 19 to 34.

43. A computer program, when loaded and run by a computer, causing the computer to perform the method as defined in any one of claims 1 to 18 or any one of claims 19 to 34.
